# EUROPEAN PATENT APPLICATION

(11) **EP 4 575 414 A1**
(43) Date of publication of application: **25.06.2025**
(21) Application number: 23850044.1
(22) Date of filing: 31.07.2023
(51) Int. Cl.: G01D 5/347

(54) **REFLECTIVE-TYPE OPTICAL SCALE FOR ENCODER, REFLECTIVE-TYPE OPTICAL ENCODER, METHOD FOR MANUFACTURING REFLECTIVE-TYPE OPTICAL SCALE FOR ENCODER, AND MULTI-SURFACE REFLECTIVE-TYPE OPTICAL SCALE MOUNT FOR ENCODER**

(30) Priority: 02.08.2022 JP 2022123423
(71) Applicant: Dai Nippon Printing Co., Ltd., Tokyo 162-8001 (JP)
(72) Inventor: IMAI, Tsuyoshi, Tokyo 162-8001 (JP)
(74) Representative: Müller-Boré & Partner Patentanwälte PartG mbB
(86) International application number: PCT/JP2023/027946
(87) International publication number: WO 2024/029490

(57) **Abstract**

The present disclosure provides a reflective type optical scale for encoder including a disk-shaped metal substrate including a first surface, and a second surface facing the first surface, and a low reflection layer disposed on the first surface side of the metal substrate in a patterned shape along with a circumferential direction of the metal substrate, wherein the metal substrate has a reflection coefficient on at least the first surface side that is 50% or more, and a thickness of 0.05 mm or more and 0.60 mm or less; and the metal substrate includes a shear droop at an outer circumferential edge of the first surface side, and a width of the shear droop is 500 µm or less.

## Description

### Technical Field

The present disclosure relates to a reflective type optical scale for encoder, a reflective type optical encoder, a method for producing a reflective type optical scale for encoder, and a multi-surface attaching reflective type optical scale for encoder.

### Background Art

Conventionally, an optical encoder is used in materials such as a servomotor including a control mechanism. There are a transmissive type encoder and a reflective type encoder as the optical encoder, but there are advantages in the reflective type encoder that the optical path is shorter compared to that of the transmissive type encoder, decreasing in size and thickness is easy, and assembling is easy since positional determination of the light emitting element and light receiving element is unnecessary.

The reflective type optical encoder includes a reflective type optical scale, a light source such as LED irradiating light to the scale, and a photodetector detecting a reflected light from the scale. In the reflective type optical scale, a reflection region (high reflection region) and non-reflection region (low reflection region) are disposed alternately, and the reflection coefficient of the light in the reflection region is higher than the reflection coefficient of the light in the non-reflection region (for example, Patent Document 1).

For this reason, the intensity of the light reflected from the scale and incident to the photodetector creates strength and weakness by the change in the position of the scale. The photodetector detects the strength and weakness of the light created by the movement of the position of the scale in the length measurement direction. The reflective type optical encoder processes the displacement information of the position of the scale according to the strength and weakness of the light detected, and can obtain the positional information.

### Citation List

### Patent Documents

Patent Document 1: Japanese Patent Application Laid-Open (JP-A) No. 2005-241248

### Summary

### Technical Problem

Conventionally, the reflective type optical scale is produced by individualizing a multi-layer attaching body in which a plurality of the reflective type optical scale is disposed side by side. In the individualizing step, since the processing accuracy is well, individualization is often done by etching processing. However, the individualization by etching processing is disadvantageous in terms of cost.

For this reason, the inventor of the present application has tried a method for individualizing the multi-surface attaching reflective type optical scale by punching processing. However, in the scale individualized by punching processing, a shear droop at an outer circumferential edge (hereinafter also referred to as an outer circumferential shear droop) is generated. The inventor of the present application has found out that, there are some cases peeling and cracks are generated in the low reflection layer when the outer circumferential shear droop is generated in the low reflection region where the low reflection layer is formed. Thus, he has studied about not disposing the low reflection layer in advance in the region where the outer circumferential shear droop is generated by punching processing. On the other hand, usually, since a certain sized low reflection region is required depending on the encoder device for the optical scale for encoder, when a region where the low reflection layer is not formed at the outer circumferential edge of the optical scale, the actual scale size will be large. Then, a reflective type optical scale for encoder in which the outer circumferential shear droop region due to punching processing is reduced has been required.

The present invention has been made in view of the above circumstances, and a main object thereof is to provide a reflective type optical scale for encoder in which the outer circumferential shear droop region is reduced.

### Solution to Problem

One embodiment of the present disclosure provides a reflective type optical scale for encoder including a disk-shaped metal substrate including a first surface, and a second surface facing the first surface, and a low reflection layer disposed on the first surface side of the metal substrate in a patterned shape along with a circumferential direction of the metal substrate, wherein the metal substrate has a reflection coefficient on at least the first surface side that is 50% or more, and a thickness of the metal substrate is 0.05 mm or more and 0.60 mm or less; and the metal substrate includes a shear droop at an outer circumferential edge of the first surface side, and a width of the shear droop is 500 µm or less.

Another embodiment of the present disclosure provides a reflective type optical encoder characterized by including the above described reflective type optical scale for encoder; a light source irradiating a measuring beam to a surface where the low reflection layer of the reflective type optical scale for encoder is disposed; and a photodetector detecting a reflected light from the reflective type optical scale for encoder.

Another embodiment of the present disclosure provides a method for producing a reflective type optical scale for encoder, the method including: a manufacturing step of manufacturing a multi-surface attaching body including: a metal substrate to be processed that includes a first surface, and a second surface facing the first surface, and has a reflection coefficient on at least the first surface side that is 50% or more, and a thickness of 0.05 mm or more and 0.60 mm or less; and multiple of a low reflection layer attached on the first surface side of the metal substrate to be processed in a patterned shape in a circumferential shape, wherein a projected line for outer circumferential punching of the reflective type optical scale for encoder is formed in outer side on a basis of an outer circumferential surface of each of the low reflection layer; and an individualizing step of individualizing the multi-surface attaching body by punching in the projected line for outer circumferential punching to obtain a reflective type optical scale for encoder.

Another embodiment of the present disclosure provides a multi-surface attaching reflective type optical scale for encoder including: a metal substrate to be processed that includes a first surface, and a second surface facing the first surface, and has a reflection coefficient on at least the first surface side that is 50% or more, and a thickness of 0.05 mm or more and 0.60 mm or less; and multiple of a low reflection layer attached on the first surface side of the metal substrate to be processed in a patterned shape in a circumferential shape, wherein a projected line for outer circumferential punching of the reflective type optical scale for encoder is formed in outer side on a basis of an outer circumferential surface of each of the low reflection layer; and a distance between the projected line for outer circumferential punching of the reflective type optical scale for encoder and the outer circumferential surface of the low reflection layer is 500 µm or more and 1500 µm or less.

### Advantageous Effects

The present disclosure exhibits an effect of providing a reflective type optical scale for encoder in which the outer circumferential shear droop region is reduced.

### Brief Description of Drawings

FIG. 1 is a schematic top view exemplifying the reflective type optical scale for encoder in the present disclosure.
FIG. 2 is a partially enlarged cross-sectional view exemplifying the reflective type optical scale for encoder in the present disclosure.
FIG. 3 is a schematic cross-sectional view exemplifying the reflective type optical scale for encoder in the present disclosure.
FIG. 4 is a schematic perspective view exemplifying the reflective type optical encoder in the present disclosure.
FIG. 5 is a schematic top view exemplifying the multi-surface attaching reflective type optical scale for encoder in the present disclosure.
FIG. 6 is a schematic cross-sectional view exemplifying a punching processing device to be used in the individualizing step in the method for producing the reflective type optical scale for encoder in the present disclosure.
FIG. 7 is a graph showing the results of Experimental Examples 1-1 to 1-6 and Experimental Examples 2-1 to 2-5.

### Description of Embodiments

The present disclosure includes embodiments of a reflective type optical scale for encoder, a reflective type optical encoder, a method for producing a reflective type optical scale for encoder, and a multi-surface attaching reflective type optical scale for encoder. Embodiments of the present disclosure will be hereinafter explained with reference to, for example, drawings. However, the present disclosure is enforceable in a variety of different forms, and thus should not be taken as is limited to the contents described in the embodiments exemplified as below. Also, the drawings may show the features of the present disclosure such as width, thickness, and shape of each part schematically comparing to the actual form in order to explain the present disclosure more clearly in some cases; however, it is merely an example, and thus does not limit the interpretation of the present disclosure. Also, in the present description and each drawing, for the factor same as that described in the figure already explained, the same reference sign is indicated and the explanation thereof may be omitted.

In the present description, upon expressing an aspect of arranging one member on the other member, when it is expressed simply "on" or "below", both of when the other member is directly arranged on or below the one member so as to contact with each other, and when the other member is arranged on or below the one member further interposing an additional member, can be included unless otherwise described. Also, in the present description, on the occasion of expressing an aspect wherein some member is placed on the surface of the other member, when described as merely "on the surface side" or "on the surface", unless otherwise stated, it includes both of the following cases: a case wherein some member is placed directly on or directly below the other member so as to be in contact with the other member, and a case wherein some member is placed on the upper side or the lower side of the other member via yet another member.

Also, in the present descript.tion, "reflective type optical scale for encoder" may be simply referred to as "optical scale".

Hereinafter, the reflective type optical scale for encoder, the reflective type optical encoder, the method for producing the reflective type optical scale for encoder, and the multi-surface attaching reflective type optical scale for encoder in the present disclosure will be explained in details.

### A. Reflective type optical scale for encoder

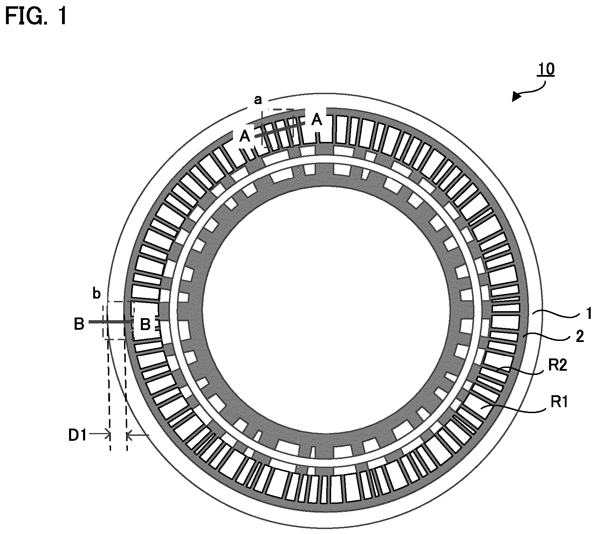

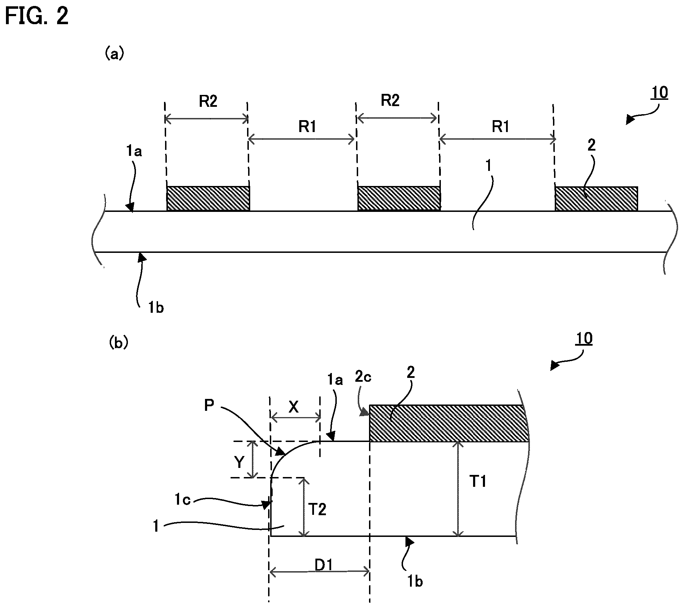

FIG. 1 is a schematic top view illustrating an example of the reflective type optical scale for encoder in the present disclosure. FIG. 2 (a) is an enlarged view of cross-section A-A in the dotted line frame "a" part of FIG. 1. FIG. 2 (b) is an enlarged view of cross-section B-B in the dotted line frame "b" part of FIG. 1.

Reflective type optical scale for encoder 10 shown in FIG. 1 and FIG. 2 includes disk-shaped metal substrate 1 including first surface 1a and second surface 1b facing the first surface, and low reflection layer 2 disposed on the first surface 1a side of the metal substrate 1 in a patterned shape along with a circumferential direction of the metal substrate 1. In the present disclosure, the metal substrate 1 has a reflection coefficient on at least the first surface 1a that is the specified value or more, and a thickness of the metal substrate 1 itself is in the specified range. Further, the metal substrate 1 includes, as shown in FIG. 2 (b), shear droop P at an outer circumferential edge of the first surface 1a side, and width X of the shear droop P is the specified value or less. The reflective type optical scale for encoder 10 in FIG. 1 is in a perforated disk-shape, wherein low reflection region R2 that is a region where low reflection layer 2 is arranged, and high reflection region R1 that is a region where the low reflection layer 2 is not arranged, are alternately disposed in the circumferential direction. The low reflection region R2 includes the metal substrate 1 and the low reflection layer 2 in a thickness direction of the reflective type optical scale for encoder 10. The high reflection region R1 includes the metal substrate 1. The reflection coefficient of the light in the high reflection region R1 is higher than the reflection coefficient of the light in the low reflection region R2. Incidentally, the reflection coefficient of the light in the high reflection region R1 and the reflection coefficient of the light in the low reflection region R2 show a reflection coefficient of the same wavelength at the same incident angle.

The reflective type optical scale for encoder in the present disclosure includes a shear droop at an outer circumferential edge of the first surface side of the metal substrate, and a width of the shear droop is the specified value or less. Such an optical scale including a shear droop at the outer circumferential edge of the metal substrate is usually the one produced by punching processing. Thus, it is more advantageous in terms of cost compared to an optical scale produced by etching processing. Also, in such an optical scale in which the outer circumferential shear droop region of the metal substrate is reduced, the width of the region where the low reflection layer is not formed can be narrowed, and thus peeling and cracks of the low reflection layer can be inhibited while inhibiting enlarging the size of the scale. Hereinafter, the reflective type optical scale for encoder of the present disclosure will be described in details.

### 1. Metal substrate

### (1) Outer circumferential shear droop

The metal substrate in the present disclosure is in a disk-shape, includes a first surface and a second surface facing the first surface, and includes a shear droop at an outer circumferential edge of the first surface side. Further, the width of the shear droop of the metal substrate in the present disclosure is 500 µm or less, preferably 450 µm or less, more preferably 400 µm or less, and particularly preferably 350 µm or less. When the width of the shear droop is too large, it may overlap the region where the low reflection layer is formed, and there is a risk that peeling and cracks may be generated in the low reflection layer. Meanwhile, the width of the shear droop of the metal substrate in the present disclosure is, for example, 10 µm or more, may be 100 µm or more, may be 200 µm or more, and may be 250 µm or more. When the width of the shear droop is too small, there is a risk that waviness may be generated in the scale.

In specific, the width of the shear droop of the metal substrate in the present disclosure is, for example, 10 µm or more and 500 µm or less, preferably 100 µm or more and 450 µm or less, more preferably 200 µm or more and 400 µm or less, and particularly preferably 250 µm or more and 350 µm or less.

In the present description, the width of the shear droop refers to, as shown in FIG. 2 (b), distance X between a point where the shear droop of the first surface 1a of the metal substrate 1 starts and an extending line of the outer circumferential surface 1c of the metal substrate 1.

A method for measuring the width of the shear droop, that is the distance X, is as follows. First, the metal substrate is cut in the vertical direction to the first surface using methods such as snips, shirring, and laser cut, and the cut surface is polished to a flat surface using a polisher to obtain a measurement sample. The cut surface of the measurement sample is observed from a vertical direction to the cut surface by a microscope, and the distance X between a point where the shear droop of the first surface 1a of the metal substrate 1 starts, and an extending line of the outer circumferential surface 1c of the metal substrate 1 is measured. The point where the shear droop of the first surface 1a of the metal substrate 1 starts is a point where it is not parallel to the flat surface part of the first surface of the metal substrate 1, specifically a point distanced in 3 µm or more in the vertical direction. Also, the width of the outer circumferential shear droop is an average value of total 12 points observed and measured the circumference of the scale in every 30°.

The amount of the shear droop of the metal substrate in the present disclosure is, for example, 500 µm or less, preferably 450 µm or less, more preferably 400 µm or less, and particularly preferably 350 µm or less. When the amount of the shear droop is too large, there is a risk of damages due to lack of strength of the scale. Meanwhile, the amount of the shear droop of the metal substrate in the present disclosure is, for example, 10 µm or more, preferably 200 µm or more, more preferably 250 µm or more, and particularly preferably 300 µm or more. When the amount of the shear droop is too small, there is a risk that waviness may be generated in the scale.

In specific, the amount of the shear droop of the metal substrate in the present disclosure is, for example, 10 µm or more and 500 µm or less, preferably 200 µm or more and 450 µm or less, more preferably 250 µm or more and 400 µm or less, and particularly preferably 300 µm or more and 350 µm or less.

In the present description, the amount of the shear droop refers to, as shown in FIG. 2 (b), distance Y between a top edge of the outer circumferential surface 1c of the metal substrate 1 (border point between shear droop and outer circumferential surface 1c) , and an extending line of the first surface 1a of the metal substrate.

As a method for measuring the amount of the shear droop, that is the distance Y, a measurement sample is produced in the same manner as in the method for measuring the amount of the shear droop described above, and the distance Y is measured. Incidentally, the top edge of the outer circumferential surface 1c of the metal substrate 1 (border point of shear droop and outer circumferential surface 1c) refers to a point where it is not parallel to the outer circumferential surface 1c of the metal substrate 1, specifically a point distanced in 3 µm or more in the plane direction.

Also, a rate (T2/T1) of a thickness T2 in an outer circumferential edge of the metal substrate with respect to a thickness T1 of the metal substrate described later is, for example, 0.70 or more, and may be 0.80 or more. When T2/T1 is too small, there is a risk of damages due to lack of strength of the scale. Meanwhile, the rate is, for example, 0.90 or less, and may be 0.87 or less. When T2/T1 is too large, there is a risk of generating waviness in the scale.

In specific, the rate (T2/T1) of a thickness T2 in an outer circumferential edge of the metal substrate with respect to a thickness T1 of the metal substrate in the present disclosure is preferably 0.70 or more and 0.90 or less, and more preferably 0.80 or more and 0.87 or less.

When the metal substrate in the present disclosure is in a perforated disk-shape, there may be a shear droop at an inner circumferential edge (hereinafter also referred to as inner circumferential shear droop) of the first surface side. The width and the amount of the inner circumferential shear droop may be the same or different from the width and the amount of the outer circumferential shear droop.

### (2) Reflection coefficient

The metal substrate in the present disclosure has a reflection coefficient on at least the first surface that is 50% or more, may be 55% or more, and may be 60% or more. The reflection coefficient is, for example, 100% or less.

In specific, the reflection coefficient of the first surface of the metal substrate in the present disclosure is, for example, 50% or more and 100% or less, preferably 55% or more and 100% or less, and more preferably 60% or more and 100% or less.

Note that the reflection coefficient here is, for example, a reflection coefficient to a detected light used in the optical encoder, and when the incident light is any wavelength in the range of 500 nm to 1000 nm, the reflection coefficient is preferably in the above described range when the incident angle is in the range of 5° to 70°. As a method for measuring the reflection coefficient, SolidSpec 3700DUV from Shimadzu Corporation can be used with the irradiation beam size: about 6 mm * 15 mm. P polarized light and S polarized light are measured to take the average of the sum to calculate the 45° linear polarized light, and thereby the reflection coefficient is calculated. When the reflection coefficient of the metal substrate is in the above range, since the difference between the reflection coefficient in the high reflection region and the reflection coefficient in the low reflection region is large, erroneous detection by the photodetector can be inhibited, and the detection accuracy of the signals can be improved.

### (3) Thickness

In the metal substrate in the present disclosure, the thickness T1 is 0.05 mm or more, preferably 0.1 mm or more, and more preferably 0.3 mm or more. When the thickness of the metal substrate is in the above range, the strength as the reflective type optical scale for encoder is sufficient. Meanwhile, the thickness T1 of the metal substrate is, 0.60 mm or less, preferably 0.50 mm or less, and more preferably 0.4 mm or less. When the thickness of the metal substrate is in the above range, the width of the outer circumferential shear droop can be easily in the above described range. Note that the thickness T1 of the metal substrate refers to the average thickness of the metal substrate excluding the shear droop region.

In specific, the thickness T1 of the metal substrate in the present disclosure is, 0.05 mm or more and 0.60 mm or less, preferably 0.10 mm or more and 0.50 mm or less, and more preferably 0.30 mm or more and 0.40 mm or less.

### (4) Others

Examples of the material of the metal substrate that has the above described reflection coefficient, and can obtain the above described outer circumferential shear droop width may include stainless steel (SUS), copper, and aluminum.

Also, the metal substrate in the present disclosure is in a disk-shape, and for example, may be a perforated disk-shape including a center hole, or not may not include a center hole. When the metal substrate is in a perforated disk-shape, in a plan view, the outer diameter is, for example, 15 mm or more, and may be 20 mm or more. Meanwhile, the outer diameter is, for example, 70 mm or less, and may be 60 mm or less. In specific, the outer diameter is, for example, 15 mm or more and 70 mm or less, and may be 20 mm or more and 60 mm or less. Also, the inner diameter is, for example, 5 mm or more and 20 mm or less. Also, the difference between the outer diameter and the inner diameter (difference between outer and inner diameters) is, for example, 8 mm or more and 13 mm or less. In this range, waviness can be prevented from generating in the scale during punching processing.

### 2. Low reflection layer

The low reflection layer in the present disclosure is arranged on the first surface side of the metal substrate in a patterned shape along with a circumferential direction of the metal substrate. In the present disclosure, in the low reflection region that is a region where the low reflection layer is arranged, the reflection coefficient in any of the wavelength in the range of the wavelength region of 500 mm to 1000 mm is, for example, 10% or less, may be 5% or less, and may be 1% or less. Meanwhile, the reflection coefficient of the low reflection region is, for example, 0% or more. In specific, the reflection coefficient of the low reflection region in the present disclosure is, for example, 0% or more and 10% or less, preferably 0% or more and 5% or less, and more preferably 0% or more and 1% or less.

The reflective type optical scale for encoder of the present disclosure preferably does not include the low reflection layer in the region from the outer circumferential surface of the metal substrate until 500 µm inner side. The metal substrate in the reflective type optical scale for encoder of the present disclosure includes an outer circumferential shear droop, and the width of the shear droop is 500 µm or less. When the low reflection layer is not included in the region from the outer circumferential surface of the metal substrate until 500 µm inner side, peeling and cracks of the low reflection layer can be inhibited.

In specific, as shown in FIG. 2 (b), the distance D1 between the outer circumferential surface 1c of the metal substrate 1 and the outer circumferential surface 2c of the low reflection layer 2 is, preferably 500 µm or more, more preferably 550 µm or more, and particularly preferably 600 µm or more. When the distance D1 is in the above range, peeling and cracks of the low reflection layer can be easily inhibited. Meanwhile, the distance D1 is, for example, 1500 µm or less, preferably 1000 µm or less, and more preferably 900 µm or less. When the distance D1 is in the above range, enlarge in size of the reflective type optical scale for encoder can be inhibited.

In specific, the distance D1 is, for example, 500 µm or more and 1500 µm or less, preferably 550 µm or more and 1000 µm or less, and more preferably 600 µm or more and 900 µm or less.

Note that the value of the distance D1 can also be applied to a reflective type optical scale for encoder including a disk-shaped metal substrate including a first surface and a second surface facing the first surface, and a low reflection layer disposed on the first surface side of the metal substrate in a pattern shape along with a circumferential direction of the metal substrate.

The low reflection layer in the present disclosure is arranged on the first surface side of the metal substrate in a patterned shape along with a circumferential direction of the metal substrate. As the low reflection layer, the constitution is not particularly limited if the reflection coefficient of the light incident to the low reflection region that is a region where the low reflection layer is arranged, is smaller than the reflection coefficient of the light incident to the high reflection region.

In the present disclosure, it is preferable to include a three layer structure of, from the metal substrate side, a metal chrome layer, and a chromium oxide layer and a chromium nitride layer formed in random order on the metal chrome layer. With such a low reflection layer, in any of the wavelength in the range of the wavelength region of 500 nm to 1000 mm, the reflection coefficient of the light incident to the low reflection region can be lowered to, 10% or less, preferably 5% or less, and further, 1% or less. Meanwhile, the reflection coefficient of the low reflection region is, for example, 0% or more. In specific, the reflection coefficient of the low reflection region in the present disclosure is, for example, 0% or more and 10% or less, preferably 0% or more and 5% or less, and more preferably 0% or more and 1% or less.

Note that the reflection coefficient of the low reflection region preferably satisfies the above described range at any of the angles in the range of the incident angle 5° to 70°. As a result, the difference between the reflection coefficient in the high reflection region and the reflection coefficient in the low reflection region can be increased. Also, by preparing only the metal chrome, the chromium oxide layer and the chromium nitride layer can be easily formed by using measures such as reactive sputtering. Further, patterning with high definition can be more easily performed compared to the silicon oxide layer.

In the present description, "the chromium oxide layer and the chromium nitride layer formed in random order on the metal chrome layer" means that it may be formed in the order of the metal chrome layer, the chromium oxide layer, and the chromium nitride layer, and may be formed in the order of the metal chrome layer, the chromium nitride layer, and the chromium oxide layer.

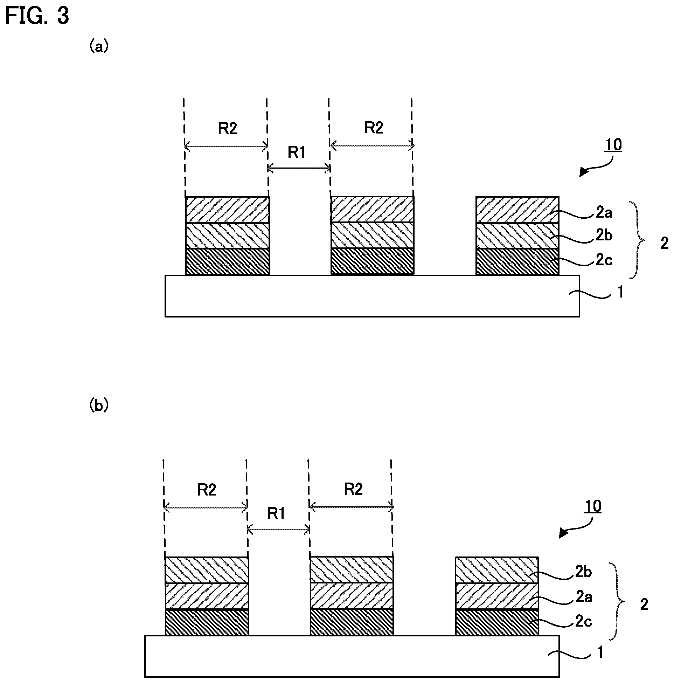

For example, the low reflection layer 2 of the reflective type optical scale for encoder 10 shown in FIG. 3 (a) includes, from the metal substrate 1 side, the metal chrome layer 2c, the chromium nitride layer 2b formed on the metal chrome layer 2c, and the chromium oxide layer 2a formed on the chromium nitride layer 2b. Meanwhile, the low reflection layer 2 of the reflective type optical scale for encoder 10 shown in FIG. 3 (b) includes, from the metal substrate 1 side, the metal chrome layer 2c, the chromium oxide layer 2a formed on the metal chrome layer 2c, and the chromium nitride layer 2b formed on the chromium oxide layer 2a.

The outermost surface of the low reflection region is, preferably a surface of the chromium oxide layer or the chromium nitride layer of the low reflection layer, and particularly preferably a surface of the chromium oxide layer. The reason therefor is that reflection coefficient in the low reflection region can be more effectively reduced.

Hereinafter, "the low reflection layer in which the metal chrome layer, the chromium nitride layer, and the chromium oxide layer are disposed in this order" is referred to as a low reflection layer in first specification, and "the low reflection layer in which the metal chrome layer, the chromium oxide layer, and the chromium nitride layer are disposed in this order" is referred to as a low reflection layer in second specification.

### (1) Low reflection layer in first specification

In the low reflection layer in the present specification, from the substrate side, layers are disposed in the order of, the metal chrome layer, the chromium nitride layer, and the chromium oxide layer. In the low reflection region including the low reflection layer in the present specification, the reflection coefficient in any of the wavelength in the range of the wavelength region of 500 nm to 1000 nm of the light irradiated from the light source can be decreased to 5% or less, particularly 0.5% or less, and the change in the reflection coefficient with respect to the wavelength change is gentle, so that the control of the reflection coefficient is easy. In specific, the reflection coefficient can be decreased to 0% or more and 5% or less, in particular, 0% or more and 0.5% or less. Hereinafter, each layer will be described in details.

### (a) Metal chrome layer

In the present specification, the metal chrome layer is arranged on the metal substrate. The metal chrome layer is a layer configured by metal chrome. The metal chrome layer is a layer that does not substantially transmit the light irradiated from the light source, and the transmittance is preferably 0.0% or more and 1.0% or less. The transmittance can be measured using measures such as a spectrophotometer (MPC-3100) from Shimadzu Corporation. The layer thickness is, for example, 40 nm or more, and preferably 70 nm or more.

Here, "thickness" of each member refers to a thickness obtained by a general measurement method. Examples of the measurement method of the thickness may include a stylus-type method of calculating the thickness by detecting unevenness by tracing the surface by a stylus, and an optical method of calculating the thickness based on the spectroscopic reflection spectrum. In specific, the thickness can be measured using a stylus-type layer thickness meter P-15 from KLA Corporation. Incidentally, as the thickness, the average value of the thickness measurement result in a plurality of points of a targeted member may be used.

As the method for forming the metal chrome layer, for example, a sputtering method, an ion plating method, and a physical vapor deposition method (PVD) such as a vacuum vapor deposition method may be used.

### (b) Chromium nitride layer

The chromium nitride layer in the present specification is disposed between the metal chrome layer and the chromium oxide layer. The chromium nitride layer is different from chromium oxide nitride and chromium oxide nitride carbide, but the main component is chrome and nitrogen, and substantially does not contain impurities other than chrome and nitrogen.

As "x" that represents the atomic ratio of Cr and N of the chromium nitride (CrNx) layer, it is preferably 0.4 or more and 1.1 or less.

Also, in the chromium nitride layer, when the whole layer is regarded as 100 atom%, the rate of chrome and nitrogen is in the range of 80% or more and 100% or less, and above all, preferably the purity in the range of 90% or more and 100% or less. As the impurities, for example, substances such as hydrogen, oxygen, and carbon may be included.

The layer thickness (T_{N}) of the chromium nitride layer is, preferably in the range of 5 nm or more and 100 nm or less, and particularly preferably in the range of 10 nm or more and 80 nm or less. Also, in the relation with the layer thickness (Tₒ) of the chromium oxide layer described later, when the wavelength is 850 nm, it is preferable that the total of T_{N} and T_{O} is 40 nm or more, and when the wavelength is 550 nm, it is preferable that the total of T_{N} and T_{O} is 20 nm or more. In this layer thickness range, compared to when out of the range, the reflection coefficient in the low reflection region can be easily decreased to 10% or less, particularly 5% or less. Further, the layer thickness (T_{N}) of the chromium nitride layer is preferably in the range of 10 nm or more and 80 nm or less in order to facilitate decreasing the reflection coefficient in the whole region from green to infrared (about 500 nm or more and 1000 nm or less) region.

As the method for forming chromium nitride, a reactive sputtering method, an ion plating method, and a physical vapor deposition method (PVD) such as a vacuum vapor deposition method may be used. On the occasion of using the reactive sputtering method, the chromium nitride layer can be formed by a reactive sputtering method using Cr target by introducing nitrogen into an argon (Ar) gas. On this occasion, the control of the composition of the chromium nitride layer can be performed by controlling the ratio of the Ar gas and the nitrogen gas.

### (c) Chromium oxide layer

The chromium oxide layer is formed on the chromium nitride layer, the main component is chrome and oxygen, it is different from the chromium oxide nitride and the chromium oxide nitride carbide, and impurities other than chromium and oxygen are substantially not included.

As "y" representing the atomic ratio of Cr and O of the chromium oxide (CrOy) layer, it is preferably 1.4 or more and 2.1 or less.

In specific, in the chromium oxide layer, when the whole layer is regarded as 100 atom%, the rate of chrome and oxygen is preferably in the range of 80% to 100%, and above all, it is preferably the purity in the range of 90% or more and 100% or less.

As the impurities, substances such as hydrogen, nitrogen, and carbon may be included.

The layer thickness of the chromium oxide layer is not particularly limited, but preferably in the range of 5 nm or more and 100 nm or less, and particularly preferably in the range of 10 nm or more and 80 nm or less. Also, the layer thickness (Tₒ) of the chromium oxide is, preferably in the range with which the total layer thickness with the layer thickness (T_{N}) of the chromium nitride layer is in the range described in "(1) Low reflection layer in first specification (b) Chromium nitride layer" above. Further, the layer thickness (Tₒ) of the chromium oxide layer is preferably in the range of 10 nm or more and 65 nm or less to facilitate decreasing the reflection coefficient in the whole region from green to infrared (about 500 or more and 1000 nm or less) region.

As a method for forming chromium oxide, for example, a reactive sputtering method, an ion plating method, and a physical vapor deposition method (PVD) such as a vacuum vapor deposition method may be used. On the occasion of using the reactive sputtering method, the chromium oxide layer can be formed by introducing oxygen into an argon (Ar) gas, and by a reactive sputtering method using a Cr target. On this occasion, the control of the composition of the chromium oxide layer can be performed by controlling the ratio of the Ar gas and the oxygen gas.

### (2) Low reflection layer in second specification

In the low reflection layer in the present specification, from the metal substrate side, layers are disposed in the order of, a metal chrome layer, a chromium oxide layer, and a chromium nitride layer. The low reflection region including the low reflection layer in the present specification can decrease the reflection coefficient in any of the wavelength in the range of the wavelength region of 500 nm or more and 1000 nm or less of the light irradiated from the light source to 5% or less, and in particular, 1% or less. In specific, the reflection coefficient can be decreased to 0% or more and 5% or less, in particular, 0% or more and 1% or less. Hereinafter, each layer will be described in details.

### (a) Metal chrome layer

The metal chrome layer in the present specification is formed on the substrate. The details of the metal chrome layer are the same as those described in "(1) Low reflection layer in first specification (a) Metal chrome layer" above; thus, the descriptions herein are omitted.

### (b) Chromium oxide layer

The chromium oxide layer in the present specification is disposed between the metal chrome layer and the chromium nitride layer. The layer thickness is not particularly limited, but for example, it is preferably 5 nm to 60 nm, and particularly preferably in the range of 10 nm to 50 nm. Further, it is preferable to satisfy the relation with the layer thickness of the chromium nitride layer described later. This is to more certainly decrease the reflection coefficient in any of the wavelength in the range of the wavelength region of in the range of 500 nm to 1000 nm of the low reflection region to 10% or less, and in particular, 5% or less.

Furthermore, the thickness (Tₒ) of the chromium oxide layer is preferably in the range of 5 nm to 35 nm to facilitate decreasing the reflection coefficient in the whole region from green to infrared (about 500 to 1000 nm) region.

Details of other properties, composition and the method for forming the chromium oxide layer are the same as those described in "(1) Low reflection layer in first specification (c) Chromium oxide layer" above; thus, the descriptions herein are omitted.

### (c) Chromium nitride layer

The chromium nitride layer in the present specification is formed on the chromium oxide layer. The layer thickness of the chromium nitride layer in the present specification is not particularly limited, but for example, it is preferably in the range of 5 nm or more and 100 nm or less, and particularly preferably in the range of 10 nm or more and 80 nm or less. Further, in the relation with the layer thickness (Tₒ) of the chromium oxide layer, it is preferable that, the total of T_{N} and T_{O} is 30 nm or more when the wavelength is 850 nm, and the total of T_{N} and T_{O} is 15 nm or more when the wavelength is 550 nm. Furthermore, the layer thickness (T_{N}) of the chromium nitride layer in the present specification is preferably in the range of 10 nm or more and 60 nm or less to facilitate decreasing the reflection coefficient in the whole region from green to infrared (about 500 nm or more and 1000 nm or less) region.

The method for forming the low reflection layer in the present disclosure is not particularly limited, but it can be produced by selective etching and lift-off. In specific, on the metal substrate, for example, the metal chrome layer is formed by means such as a sputtering method, and then the chromium nitride layer and the chromium oxide layer are formed. Next, the metal chrome layer, the chromium nitride layer and the chromium oxide layer are patterned by photo lithography and etching to produce the low reflection layer in a patterned shape.

Also, as another method, it can be formed by a method such that a resist pattern is formed on the metal substrate, and then the metal chrome layer, the chromium nitride layer and the chromium oxide layer are formed using known vacuum layer producing method such as a sputtering method. After that, by removing the resist pattern, the metal chrome layer, the chromium nitride layer and the chromium oxide layer formed directly on the resist pattern are lifted off, and thereby the pattern of the chromium nitride layer and the chromium oxide layer is obtained.

In the low reflection region in the present disclosure, the reflection coefficient in any of the wavelength in the range of the wavelength region 500 nm or more and 1000 nm or less is, for example, 10% or less, may be 5% or less, and may be 1% or less.

In specific, the reflection coefficient of the low reflection region in the present disclosure is, for example, 0% or more and 10% or less, preferably 0% or more and 5% or less, and more preferably 0% or more and 1% or less. Note that the reflection coefficient of the low reflection region preferably satisfies the above described range at any angles in the range of the incident angle 5° or more and 70° or less. The outermost surface of the low reflection region is, preferably a surface of the chromium oxide layer or the chromium nitride layer of the low reflection layer, and particularly preferably a surface of the chromium oxide layer. It is to more effectively decrease the reflection coefficient in the low reflection region.

### 3. Constitution of other layers

The reflective type optical scale for encoder in the present disclosure may include layers other than the metal substrate and the low reflection layer. For example, the reflective type optical scale for encoder in the present disclosure may include a protective layer between the metal substrate and the low reflection layer.

The protective layer has transparency, and also, preferably includes a function of protecting the metal substrate. By arranging the protective layer, there is no risk of increasing the surface roughness of the metal substrate on the occasion of etching when the low reflection layer is formed in a patterned shape. As a result, irregular reflection of light can be inhibited. The protective layer may be, in a plan view, arranged on entire region of the metal substrate, and may be arranged on a partial region.

The material of the protective layer is not particularly limited if it is a material that has transparency and can protect the high reflection layer, and may be any of an organic material and an inorganic material.

The organic material preferably includes a resin. The resin to be used in the protective layer is not particularly limited if the resin allows the protective layer having transparency to be obtained, and examples thereof may include an ionizing radiation curable resin that is cured by irradiating an ionizing radiation such as an ultraviolet ray and an electron beam, and a thermosetting resin that is cured by heating. In specific, a novolac-based resin, a polyolefin-based resin, a polyester-based resin, a urethane-based resin, a polyimide-based resin, an acryl-based resin, and an epoxy-based resin are preferable. As the novolac-based resin, above all, a phenol novolac resin is preferable. The reason therefor is such that it is excellent in electric properties, and can inhibit defects due to static. As the acryl-based resin, above all, three functional or more acrylate such as pentaerythritol tetra acrylate and dipenta erythritol tetra acrylate is preferable. The reason therefor is to improve photocurability. As the epoxy-based resin, an epoxy acrylate resin having a fluorene structure is preferable. The reason therefor is to improve the heat resistance, close adhesion, and chemical resistance. As the epoxy-based resin, a cardo epoxy resin is also preferable. The reason therefor is to impart excellent transparency, heat resistance, surface hardness, and flatness. In the organic material, substances such as a polymerization initiator and various additives may be included other than the resin.

Examples of the inorganic material may include an inorganic compound. Examples of the inorganic compound may include an oxide, an oxide nitride, a nitride, an oxide carbide, and oxide carbide nitride of metal element or non-metal element such as silicon, aluminum, magnesium, calcium, potassium, tin, sodium, titanium, boron, yttrium, zirconium, cerium, and zinc. In particular, silicon dioxide (SiO₂) is preferable. The inorganic compound may be used alone, and may be used by mixing the above described materials in an arbitrary ratio.

### 4. Reflective type optical scale for encoder

The reflective type optical scale for encoder of the present disclosure is usually used as an optical scale for rotary encoder. The reflective type optical scale for encoder is in a disk-shape, and for example, it may be a perforated disk-shape including a center hole, and may not include the center hole. When the reflective type optical scale for encoder of the present disclosure is in a perforated disk-shape, in a plan view, the outer diameter is, for example, 15 mm or more, and may be 20 mm or more. Meanwhile, the outer diameter is, for example, 70 mm or less, and may be 60 mm or less. In specific, the outer diameter is, for example, 15 mm or more and 70 mm or less, and may be 20 mm or more and 60 mm or less. Also, the inner diameter is, for example, 5 mm or more and 20 mm or less. Also, the difference between the outer diameter and the inner diameter (difference between outer and inner diameters) is, for example, 8 mm or more and 13 mm or less. In this range, waviness can be prevented from generating in the scale during punching processing.

Also, the reflective type optical scale for encoder of the present disclosure can be produced by "C. Method for producing reflective type optical scale for encoder" described later.

### B. Reflective type optical encoder

The present disclosure provides a reflective type optical encoder characterized by including: the above described reflective type optical scale for encoder; a light source irradiating a measuring beam to a surface where the low reflection layer of the reflective type optical scale for encoder is disposed; and a photodetector detecting a reflected light from the reflective type optical scale for encoder.

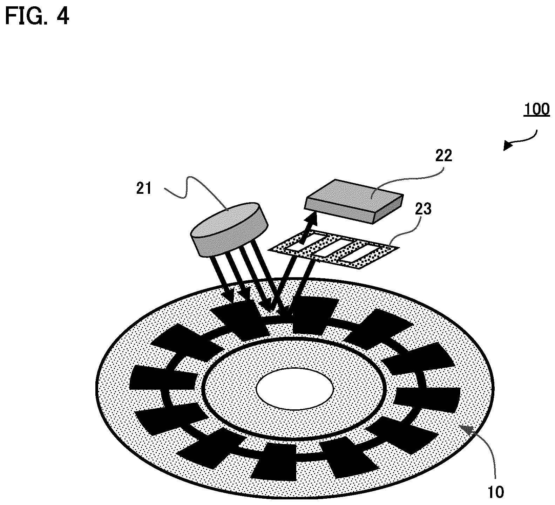

FIG. 4 is a schematic perspective view showing an example of the reflective type optical encoder including the reflective type optical scale for encoder in the present disclosure. The reflective type optical encoder 100 in the present disclosure includes the reflective type optical scale for encoder 10, and further includes, the light source 21, and the photodetector 22. In FIG. 4, fixing slit 23 is disposed between the photodetector 22 and the reflective type optical scale for encoder 10. Since the encoder of the present disclosure includes the above described reflective type optical scale for encoder of which outer circumferential shear droop is reduced, it is advantageous in terms of cost for the above described reasons, and also, peel-off and cracks of the low reflection layer can be inhibited, and thus has excellent encoder properties.

### 1. Reflective type optical scale for encoder

The reflective type optical scale for encoder is the same as that described in "A. Reflective type optical scale for encoder" above; thus, the descriptions herein are omitted.

### 2. Light source

Examples of the light source may include LED (light emitting diode) and laser. The wavelength λ of the light irradiated from the light source is, for example, in the region from green to infrared (about 500 nm or more and 1000 nm or less). The incident angle of the light to the optical scale 10 is, for example, 5° or more and 70° or less.

### 3. Photodetector

The photodetector detects light reflected by the optical scale. The photodetector includes, for example, a light receiving element (such as a photoelectric converting element) such as a photodiode and an image element.

### 4. Others

The reflective type optical encoder in the present disclosure may include a fixing slit between the photodetector and the reflective type optical scale for encoder. By arranging the fixing slit, change in the light amount that the photodetector receives increases, and the detection sensitivity can be improved. The fixing slit may be arranged between the light source and the reflective type optical scale for encoder.

### C. Method for producing reflective type optical scale for encoder

The present disclosure provides a method for producing a reflective type optical scale for encoder, the method including: a manufacturing step of manufacturing a multi-surface attaching body including: a metal substrate to be processed that includes a first surface, and a second surface facing the first surface, and has a reflection coefficient on at least the first surface that is 50% or more, and a thickness of 0.05 mm or more and 0.60 mm or less, and multiple of a low reflection layer attached on the first surface side of the metal substrate to be processed in a patterned shape disposed in a circumferential shape, wherein a projected line for outer circumferential punching of the reflective type optical scale for encoder is formed in outer side on a basis of an outer circumferential surface of each of the low reflection layer; and an individualizing step of individualizing the multi-surface attaching body by punching in the projected line for outer circumferential punching to obtain a reflective type optical scale for encoder.

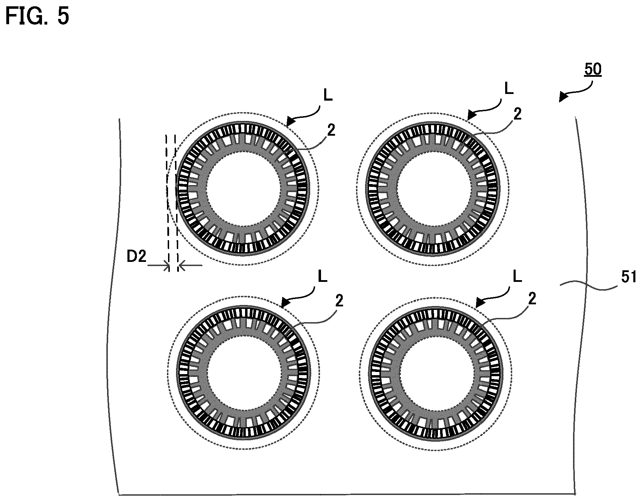

FIG. 5 is a schematic top view of the multi-surface attaching body 50 to be produced in the manufacturing step of manufacturing a multi-surface attaching body. The multi-surface attaching body 50 in the present disclosure includes: metal substrate to be processed 51 that has a reflection coefficient on at least the first surface that is the specified value or more, and a thickness in the specified range; and multiple of low reflection layer 2 attached on the first surface side of the metal substrate to be processed 51 in a pattern shape in a circumferential shape. In the multi-surface attaching body 50 in the present disclosure, a projected line L for outer circumferential punching of the reflective type optical scale for encoder is formed in outer side of each of low reflection layer 2. In the individualizing step, by individualizing the multi-surface attaching body by punching in the projected line L for outer circumferential punching, a reflective type optical scale for encoder is obtained.

### 1. Manufacturing step of manufacturing multi-surface attaching body

In the present step, a multi-surface attaching body including: a metal substrate to be processed that has a reflection coefficient on at least the first surface side that is 50% or more, and a thickness of 0.05 mm or more and 0.60 mm or less; and multiple of a low reflection layer attached on the first surface side of the metal substrate to be processed in a patterned shape in a circumferential shape, wherein a projected line for outer circumferential punching of the reflective type optical scale for encoder is formed in outer side on a basis of an outer circumferential surface of each of the low reflection layer, is manufactured.

The reflection coefficient and the thickness of the first surface of the metal substrate to be processed are the same as the reflection coefficient and the thickness of the first surface of the metal substrate. The size of the metal substrate to be processed in a plan view is not particularly limited if it is a size capable of attaching multiple of the low reflection layer in a pattern shape.

The low reflection layer is the same as the low reflection layer described in "A. Reflective type optical scale for encoder" above. Also, the method for attaching multiple of the low reflection layer in a pattern shape on the first surface side of the metal substrate to be processed is the same as the method for forming the low reflection layer described in "A. Reflective type optical scale for encoder" above.

On the multi-surface attaching body in the present disclosure, as shown in FIG. 5, a projected line L for outer circumferential punching of the reflective type optical scale for encoder is formed in outer side on a basis of the outer circumferential surface of each of the low reflection layer 2. The distance D2 between the projected line L for outer circumferential punching of the reflective type optical scale for encoder and the outer circumferential surface of the low reflection layer 2 is, preferably 500 µm or more, more preferably 550 µm or more, and particularly preferably 600 µm or more. When the distance D2 is in the above range, the outer circumferential shear droop is not easily generated in the region where the low reflection layer is formed at the time of punching processing, and thus the peel-off and cracks of the low reflection layer can be inhibited. Meanwhile, the distance D2 is, for example, 1500 µm or less, preferably 1000 µm or less, and more preferably 900 µm or less. When the distance D2 is in the above range, enlarge in size of the reflective type optical scale for encoder can be inhibited. In specific, the distance D2 is, for example, 500 µm or more and 1500 µm or less, preferably 550 µm or more and 1000 µm or less, and more preferably 600 µm or more and 900 µm or less.

It should be noted that, on the multi-surface attaching body for producing the reflective type optical scale for encoder in a perforated disk-shape, a projected line for inner circumferential punching for punching the center hole of the reflective type optical scale for encoder may be formed.

### 2. Individualizing step

In the present step, by individualizing the multi-surface attaching body manufactured in the manufacturing step of manufacturing multi-surface attaching body by punching in the projected line for outer circumferential punching, a reflective type optical scale for encoder is obtained.

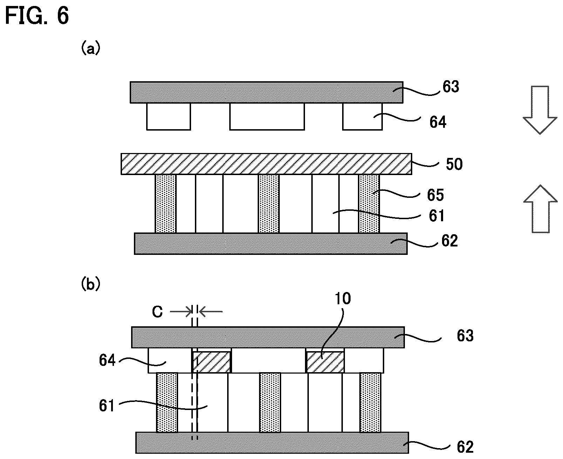

FIG. 6 is a schematic view illustrating an example of a punching processing device used in the individualizing step in the method for producing the reflective type optical scale for encoder in the present disclosure. As shown in FIG. 6 (a) and FIG. 6 (b), the multi-surface attaching body 50 attached is mounted on lower stage 62 including lower blade 61, and by moving the lower stage 62 upward and upper stage 63 including upper blade 64 downward to push-in in the multi-surface attaching body 50 to be punched out, and thereby individualized reflective type optical scale for encoder 10 can be obtained. On this occasion, the position of the upper blade is adjusted to the projected line for outer circumferential punching and the projected line for inner circumferential punching. Also, it is preferable to dispose restraining member 65 of the metal substrate in the position opposing to the upper blade 64. By the restraining member 65 and the upper blade 64 in a set at the time of punching processing, the metal substrate is sandwiched, and thereby the punching processing with less burr and shear droop can be performed.

In the present disclosure, by setting the width of clearance in the present step to be, for example, 0.020 mm or less, preferably 0.017 mm or less, and more preferably 0.015 mm or less, the width of the outer circumferential shear droop of the reflective type optical scale for encoder will be easily in the above described range. Meanwhile, the width of clearance is, for example, 0.003 mm or more, preferably 0.004 mm or more, and more preferably 0.006 mm or more. When the width of clearance is in the above range, load to the blades of the punching device can be reduced. Note that the width of clearance refers to, as shown in FIG. 6 (b), distance C between the end surface of the upper blade 64 and the end surface of the lower blade 61 in the width direction. In specific, the width of clearance is, for example, 0.003 mm or more and 0.020 mm or less, preferably 0.004 mm or more and 0.017 mm or less, and more preferably 0.006 mm or more and 0.015 mm or less.

The reflective type optical scale for encoder obtained in the present step is in the same contents as the reflective type optical scale for encoder described in "A. Reflective type optical scale for encoder" above.

### D. Multi-surface attaching reflective type optical scale for encoder

The present disclosure provides a multi-surface attaching reflective type optical scale for encoder including: a metal substrate to be processed that includes a first surface, and a second surface facing the first surface, and has a reflection coefficient on at least the first surface side that is 50% or more, and a thickness of 0.05 mm or more and 0.60 mm or less; and multiple of a low reflection layer attached on the first surface side of the metal substrate to be processed in a patterned shape in a circumferential shape, wherein a projected line for outer circumferential punching of the reflective type optical scale for encoder is formed in outer side on a basis of an outer circumferential surface of each of the low reflection layer; and a distance between a projected line for outer circumferential punching of the reflective type optical scale for encoder and an outer circumferential surface of the low reflection layer is 500 µm or more and 1500 µm or less.

According to the multi-surface attaching reflective type optical scale for encoder of the present disclosure, the distance between the projected line for outer circumferential punching of the reflective type optical scale for encoder and the outer circumferential surface of the low reflection layer is in the specified range, and thus the outer circumferential shear droop generated at the time of punching processing is not easily generated in the region where the low reflection layer is formed, which results in inhibiting the peel-off and cracks of the low reflection layer. Also, enlargement of the size of the reflective type optical scale for encoder can be inhibited.

The multi-surface attaching reflective type optical scale for encoder of the present disclosure is in the same contents as those described in "C. Method for producing reflective type optical scale for encoder" above; thus, the descriptions herein are omitted.

Incidentally, the present disclosure is not limited to the embodiments. The embodiments are exemplification, and any other variations are intended to be included in the technical scope of the present disclosure if they have substantially the same constitution as the technical idea described in the claims of the present disclosure and have similar operation and effect thereto.

### Examples

The present disclosure is hereinafter explained in further details with reference to Experimental Examples.

### [Experimental Example 1-1]

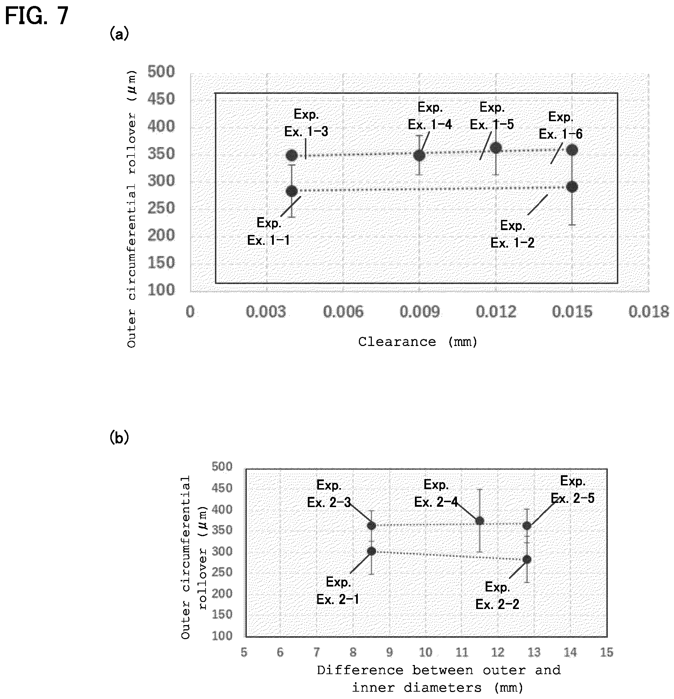

A substrate to be processed made of SUS having a thickness of 0.3 mm was prepared. By using the punching processing device shown in FIG. 6, punching processing was performed to the substrate to be processed made of SUS, and a substrate made of SUS in a perforated disk-shape having an outer diameter of 23.5 mm and an inner diameter of 15.0 mm was obtained. On this occasion, width C of clearance was 0.004 mm. The width of the outer circumferential shear droop of the obtained substrate made of SUS in the perforated disk-shape was measured. The result is shown in FIG. 7 (a).

### [Experimental Example 1-2]

Also, a substrate made of SUS in a perforated disk-shape was obtained in the same manner as in Experimental Example 1-1 except that the width of clearance was changed to 0.015 mm. The width of the outer circumferential shear droop of the obtained substrate made of SUS in the perforated disk-shape was measured. The result is shown in FIG. 7 (a).

### [Experimental Example 1-3]

A substrate made of SUS in a perforated disk-shape was obtained in the same manner as in Experimental Example 1-1 except that the thickness of the substrate to be processed made of SUS was changed to 0.4 mm. The width of the outer circumferential shear droop of the obtained substrate made of SUS in the perforated disk-shape was measured. The result is shown in FIG. 7 (a).

### [Experimental Example 1-4]

A substrate made of SUS in a perforated disk-shape was obtained in the same manner as in Experimental Example 1-1 except that the thickness of the substrate to be processed made of SUS was changed to 0.4 mm and the width of clearance was changed to 0.009 mm. The width of the outer circumferential shear droop of the obtained substrate made of SUS in the perforated disk-shape was measured. The result is shown in FIG. 7 (a).

### [Experimental Example 1-5]

A substrate made of SUS in a perforated disk-shape was obtained in the same manner as in Experimental Example 1 except that the thickness of the substrate to be processed made of SUS was changed to 0.4 mm, and the width of clearance was changed to 0.012 mm. The width of the outer circumferential shear droop of the obtained substrate made of SUS in the perforated disk-shape was measured. The result is shown in FIG. 7 (a).

### [Experimental Example 1-6]

A substrate made of SUS in a perforated disk-shape was obtained in the same manner as in Experimental Example 1 except that the thickness of the substrate to be processed made of SUS was changed to 0.4 mm, and the width of clearance was changed to 0.015 mm. The width of the outer circumferential shear droop of the obtained substrate made of SUS in the perforated disk-shape was measured. The result is shown in FIG. 7 (a).

As the results of FIG. 7 (a), it was confirmed that the width of the outer circumferential shear droop did not vary depending on the width of clearance. Meanwhile, when Experimental Example 1-1 to Experimental Example 1-2 are compared to Experimental Example 1-3 to Experimental Example 1-6, it was confirmed that the thicker the thickness of the metal substrate, the larger the width of the outer circumferential shear droop.

### [Experimental Example 2-1]

A substrate to be processed made of SUS having a thickness of 0.3 mm was prepared. By using the punching processing device shown in FIG. 6, punching processing was performed to the substrate to be processed made of SUS, and a substrate made of SUS in a perforated disk-shape having an outer diameter of 23.5 mm, an inner diameter of 15.0 mm, and a difference between the outer and inner diameters of 8.5 mm was obtained. The width of the outer circumferential shear droop of the obtained substrate made of SUS in a perforated disk-shape was measured. The result is shown in FIG. 7 (b).

### [Experimental Example 2-2]

A substrate made of SUS in a perforated disk-shape having an outer diameter of 21.96 mm, an inner diameter of 9.16 mm, and a difference between the outer and inner diameters of 12.8 mm was obtained in the same manner as in Experimental Example 2-1. The width of the outer circumferential shear droop of the obtained substrate made of SUS in the perforated disk-shape was measured. The result is shown in FIG. 7 (b).

### [Experimental Example 2-3]

A substrate made of SUS in a perforated disk-shape having an outer diameter of 23.5 mm, an inner diameter of 15.0 mm, and a difference of the outer and inner diameters of 8.5 mm was obtained in the same manner as in Experimental Example 2-1 except that the thickness of the substrate to be processed made of SUS was changed to 0.4 mm. The width of the outer circumferential shear droop of the obtained substrate made of SUS was measured. The result is shown in FIG. 7 (b).

### [Experimental Example 2-4]

A substrate made of SUS in a perforated disk-shape having an outer diameter of 5.3 mm, an inner diameter of 13.8 mm, and a difference between the outer and inner diameters of 11.5 mm was obtained in the same manner as in Experimental Example 2-1 except that the thickness of the substrate to be processed made of SUS was changed to 0.4 mm. The width of the outer circumferential shear droop of the obtained substrate made of SUS was measured. The result is shown in FIG. 7 (b).

### [Experimental Example 2-5]

A substrate made of SUS in a perforated disk-shape having an outer diameter of 21.96 mm, an inner diameter of 9.16 mm, and a difference between the outer and inner diameters of 12.8 mm was obtained in the same manner as in Experimental Example 2-1 except that the thickness of the substrate to be processed made of SUS was changed to 0.4 mm. The width of the outer circumferential shear droop of the obtained substrate made of SUS was measured. The result is shown in FIG. 7 (b).

From the results of FIG. 7 (b), it was confirmed that the outer circumferential shear droop did not vary depending on the difference between the outer and inner diameters of the substrate made of SUS. Meanwhile, it was confirmed that the thicker the thickness of the metal substrate, the larger the outer circumferential shear droop.

That is, the present disclosure can provide the following inventions.
[1] A reflective type optical scale for encoder comprising: a disk-shaped metal substrate including a first surface, and a second surface facing the first surface, and a low reflection layer disposed on the first surface side of the metal substrate in a patterned shape along with a circumferential direction of the metal substrate, wherein the metal substrate has a reflection coefficient on at least the first surface that is 50% or more, and a thickness of 0.05 mm or more and 0.60 mm or less; and the metal substrate includes a shear droop at an outer circumferential edge of the first surface side, and a width of the shear droop is 500 µm or less.
[2] The reflective type optical scale for encoder according to [1], wherein the metal substrate is a substrate made of SUS.
[3] The reflective type optical scale for encoder according to [1] or [2], wherein the metal substrate is in a perforated disk-shape including a center hole.
[4] The reflective type optical scale for encoder according to [3], wherein the metal substrate includes a shear droop at an inner circumferential edge of the first surface side, and a width of the shear droop is 500 µm or less.
[5] The reflective type optical scale for encoder according to [3] or [4], wherein a difference between an inner diameter and an outer diameter of the metal substrate in the perforated disk-shape is 8 mm or more and 13 mm or less.
[6] The reflective type optical scale for encoder according to any one of [1] to [5], wherein a rate (T2/T1) of a thickness T2 in an outer circumferential edge of the metal substrate with respect to a thickness T1 of the metal substrate is 0.70 or more and 0.90 or less.
[7] The reflective type optical scale for encoder according to any one of [1] to [6], wherein a distance D1 between an outer circumferential surface of the metal substrate and an outer circumferential surface of the low reflection layer is 500 µm or more and 1500 µm or less.
[8] The reflective type optical scale for encoder according to any one of [1] to [7], wherein an amount of the shear droop of the metal substrate is 10 µm or more and 500 µm or less.
[9] A reflective type optical scale for encoder comprising:
   a disk-shaped metal substrate including a first surface, and a second surface facing the first surface, and
   a low reflection layer disposed on the first surface side of the metal substrate in a pattern shape along with a circumferential direction of the metal substrate, wherein a distance D1 between an outer circumferential surface of the metal substrate and an outer circumferential surface of the low reflection layer is 500 µm or more and 1500 µm or less.
[10] A reflective type optical encoder characterized by comprising: the reflective type optical scale for encoder according to any one of [1] to [9]; a light source irradiating a measuring beam to a surface where the low reflection layer of the reflective type optical scale for encoder is disposed; and a photodetector detecting a reflected light from the reflective type optical scale for encoder.
[11] A method for producing a reflective type optical scale for encoder, the method comprising: a manufacturing step of manufacturing a multi-surface attaching body including: a metal substrate to be processed that includes a first surface, and a second surface facing the first surface, and has a reflection coefficient on at least the first surface that is 50% or more, and a thickness of 0.05 mm or more and 0.60 mm or less; and multiple of a low reflection layer attached on the first surface side of the metal substrate to be processed in a patterned shape in a circumferential shape, wherein a projected line for outer circumferential punching of the reflective type optical scale for encoder is formed in outer side on a basis of an outer circumferential surface of the low reflection layer; and an individualizing step of individualizing the multi-surface attaching body by punching in the projected line for outer circumferential punching to obtain a reflective type optical scale for encoder.
[12] A multi-surface attaching reflective type optical scale for encoder comprising: a metal substrate to be processed that includes a first surface, and a second surface facing the first surface, and has a reflection coefficient on at least the first surface that is 50% or more, and a thickness of 0.05 mm or more and 0.60 mm or less; and multiple of a low reflection layer attached on the first surface side of the metal substrate to be processed in a patterned shape in a circumferential shape, wherein a projected line for outer circumferential punching of the reflective type optical scale for encoder is formed in outer side on a basis of an outer circumferential surface of the low reflection layer; and a distance between a projected line for outer circumferential punching of the reflective type optical scale for encoder and an outer circumferential surface of the low reflection layer is 500 µm or more and 1500 µm or less.

### Reference Signs List

1 ... metal substrate
2 ... low reflection layer
P ... shear droop
10 ... reflective type optical scale for encoder
50 ... multi-surface attaching reflective type optical scale
for encoder
100 ... reflective type optical encoder

## Claims

1. A reflective type optical scale for encoder comprising:
a disk-shaped metal substrate including a first surface, and a second surface facing the first surface, and
a low reflection layer disposed on the first surface side of the metal substrate in a patterned shape along with a circumferential direction of the metal substrate, wherein
the metal substrate has a reflection coefficient on at least the first surface side that is 50% or more, and a thickness of 0.05 mm or more and 0.60 mm or less; and
the metal substrate includes a shear droop at an outer circumferential edge of the first surface side, and a width of the shear droop is 500 µm or less.

2. The reflective type optical scale for encoder according to claim 1, wherein the metal substrate is a substrate made of stainless.

3. The reflective type optical scale for encoder according to claim 1, wherein the metal substrate is in a perforated disk-shape including a center hole.

4. The reflective type optical scale for encoder according to claim 3, wherein the metal substrate includes a shear droop at an inner circumferential edge of the first surface side, and a width of the shear droop is 500 µm or less.

5. The reflective type optical scale for encoder according to claim 3, wherein a difference between an inner diameter and an outer diameter of the metal substrate in the perforated disk-shape is 8 mm or more and 13 mm or less.

6. The reflective type optical scale for encoder according to claim 1, wherein a rate (T2/T1) of a thickness T2 in an outer circumferential edge of the metal substrate with respect to a thickness T1 of the metal substrate is 0.70 or more and 0.90 or less.

7. The reflective type optical scale for encoder according to claim 1, wherein a distance D1 between an outer circumferential surface of the metal substrate and an outer circumferential surface of the low reflection layer is 500 µm or more and 1500 µm or less.

8. The reflective type optical scale for encoder according to claim 1, wherein an amount of the shear droop of the metal substrate is 10 µm or more and 500 µm or less.

9. A reflective type optical scale for encoder comprising:
a disk-shaped metal substrate including a first surface, and a second surface facing the first surface, and
a low reflection layer disposed on the first surface side of the metal substrate in a pattern shape along with a circumferential direction of the metal substrate, wherein
a distance D1 between an outer circumferential surface of the metal substrate and an outer circumferential surface of the low reflection layer is 500 µm or more and 1500 µm or less.

10. A reflective type optical scale encoder **characterized by** comprising:
the reflective type optical scale for encoder according to any one of claim 1 to claim 9;
a light source irradiating a measuring beam to a surface where the low reflection layer of the reflective type optical scale for encoder is disposed; and
a photodetector detecting a reflected light from the reflective type optical scale for encoder.

11. A method for producing a reflective type optical scale for encoder, the method comprising:
a manufacturing step of manufacturing a multi-surface attaching body including: a metal substrate to be processed that includes a first surface, and a second surface facing the first surface, and has a reflection coefficient on at least the first surface side that is 50% or more, and a thickness of 0.05 mm or more and 0.60 mm or less; and multiple of a low reflection layer attached on the first surface side of the metal substrate to be processed in a patterned shape in a circumferential shape, wherein a projected line for outer circumferential punching of the reflective type optical scale for encoder is formed in outer side on a basis of an outer circumferential surface of each of the low reflection layer; and
an individualizing step of individualizing the multi-surface attaching body by punching in the projected line for outer circumferential punching to obtain a reflective type optical scale for encoder.

12. A multi-surface attaching reflective type optical scale for encoder comprising: a metal substrate to be processed that includes a first surface, and a second surface facing the first surface, and has a reflection coefficient on at least the first surface side that is 50% or more, and a thickness of 0.05 mm or more and 0.60 mm or less; and multiple of a low reflection layer attached on the first surface side of the metal substrate to be processed in a patterned shape in a circumferential shape, wherein a projected line for outer circumferential punching of the reflective type optical scale for encoder is formed in outer side on a basis of an outer circumferential surface of each of the low reflection layer; and
a distance between a projected line for outer circumferential punching of the reflective type optical scale for encoder and an outer circumferential surface of the low reflection layer is 500 µm or more and 1500 µm or less.
